(19) Europäisches Patentamt
European Patent Office
Office européen des brevets

(11) **EP 2 590 851 B1**

(12) **EUROPÄISCHE PATENTSCHRIFT**

(45) Veröffentlichungstag und Bekanntmachung des Hinweises auf die Patenterteilung:
**14.02.2018 Patentblatt 2018/07**

(21) Anmeldenummer: **11719259.1**

(22) Anmeldetag: **12.05.2011**

(51) Int Cl.:
**B62D 21/15** *(2006.01)*       **B60R 19/34** *(2006.01)*
**B60R 19/40** *(2006.01)*

(86) Internationale Anmeldenummer:
**PCT/EP2011/057656**

(87) Internationale Veröffentlichungsnummer:
**WO 2012/004031 (12.01.2012 Gazette 2012/02)**

(54) **CRASHSTRUKTUR ZUR AUFNAHME VON CRASHENERGIE UND VERFAHREN ZUR EINSTELLUNG EINER STEIFIGKEIT EINER CRASHSTRUKTUR**

CRASH STRUCTURE FOR ABSORBING CRASH ENERGY AND PROCESS TO ADAPT THE STRENGTH OF THE CRASH STRUCTURE

STRUCTURE POUR L'ABSORPTION DE L'ENERGIE D'UN CRASH ET PROCEDE POUR ADAPTER LA RESISTANCE DE LA STRUCTURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.07.2010 DE 102010031032**
**15.07.2010 DE 102010031358**

(43) Veröffentlichungstag der Anmeldung:
**15.05.2013 Patentblatt 2013/20**

(73) Patentinhaber: **Robert Bosch GmbH**
**70442 Stuttgart (DE)**

(72) Erfinder: **LOOSEN, Stephan**
**Ludwigsburg**
**71642 (DE)**

(56) Entgegenhaltungen:
EP-A1- 2 022 682          WO-A1-2009/063275
DE-A1-102007 012 962    DE-U1- 20 013 385
US-A- 4 823 923            US-A1- 2008 185 852

**Beschreibung**

Stand der Technik

Die Erfindung betrifft eine Crashstruktur zur Aufnahme von Crashenergie bzw. ein Verfahren zur Einstellung einer Steifigkeit einer solchen Crashstruktur nach der Gattung der unabhängigen Patentansprüche.

Aus EP 1 792 786 A2 ist eine Crashbox bekannt, die ein gehäuseartiges Deformationsprofil mit einer längsträgerseitigen Flanschplatte aufweist und als Faltkonstruktion aus Metallblech ausgebildet ist. Das Deformationsprofil besteht aus zwei Schalenbauteilen, wobei an jedem Schalenbauteil ein Flanschplattenabschnitt angeformt ist. Die Schalenbauteile werden aus Ausgangsplatinen aus Metallblech gefaltet, anschließend zusammengesetzt und mittels Widerstandsschweißpunkten aneinander gefügt. Dies stellt eine herkömmliche Crashbox dar ohne jede Adaption auf einen Crashvorgang. Eine solche Adaption ist jedoch beispielsweise aus DE 197 45 656 A1 bekannt. Dabei wird ein Pralldämpfer für ein Kraftfahrzeug vorgeschlagen, wobei in Abhängigkeit von einem Precrash-Signal, das ist ein Signal einer Rundumsichtsensorik wie an einer Radarsensorik oder einem Aufprallsignal eine Deformation gesteuert werden kann. Vorgeschlagen wird, dass an einem Deformationselement Schieber sich senkrecht zur Kraftrichtung bewegen und Deformationselemente dadurch sperren, so dass durch die Kraftwirkung diese Deformationselemente durch plastische Verformung aufgrund der Sperrung Crashenergie abbauen. Durch eine parallele Anordnung oder durch einen Ineinanderbau von solchen Deformationselementen ist eine Adaption auf den Crashvorgang möglich. Als weiteres Beispiel wird vorgeschlagen, ein Deformationselement durch eine Verjüngung zum Abbau von Crashenergie zu benutzen. Dabei ist ein Element zur Verjüngung fixiert und ein weiteres kann durch einen Schieber frei gegeben werden, um die Verjüngung zu reduzieren. Die Bewegung des Schiebers erfolgt dabei radial, d.h. senkrecht zur Kraftrichtung und damit zur Längsachse des Deformationselements, üblicherweise ein Zylinder mit einer vorgegebenen Wanddicke. Die WO 2009/063275 A1 offenbart eine Fahrzeugkarosseriestruktur und ein Fahrzeug mit einer solchen Karosseriestruktur, wobei eine Steifigkeit mittels einer pyrotechnisch bewegbaren Verriegelungsvorrichtung eingestellt werden kann. Die US 4 823 923 A offenbart eine Energiedämpfungsvorrichtung, wobei Aufprallkräfte innerhalb vorbestimmter Grenzen dissipiert werden können. Die US 2008/185852 A1 offenbart eine quetschbare Vorrichtung zum Einstellen einer Karosseriefestigkeit für ein Fahrzeug, mit veränderbarer Quetschfestigkeit. Die EP 2 022 682 A1 offenbart eine Karosseriestruktur eines Kraftfahrzeugs und ein eine solche Karosseriestruktur umfassendes Kraftfahrzeug.

Offenbarung der Erfindung

Die erfindungsgemäße Crashstruktur zur Aufnahme von Crashenergie bzw. das erfindungsgemäße Verfahren zur Einstellung einer Steifigkeit einer solchen Crashstruktur mit den Merkmalen der unabhängigen Patentansprüche haben demgegenüber den Vorteil, dass nunmehr durch die Erfindung die Unterscheidung von verschiedenen schweren Fahrzeugkollisionen für eine Einstellung einer Steifigkeit der Crashstruktur frühzeitig möglich ist. Das Signal der Sensorik kann aber auch dazu verwendet werden, wie aus den abhängigen Patentansprüchen hervorgeht, andere Rückhaltemittel wie Airbags oder Gurtstraffer anzusteuern. Weiterhin wird das Ziel verfolgt, sowohl den Eigen- als auch den Partnerschutz im Falle einer Kollision sicherzustellen und gleichzeitig durch die Ausführung der Crashstruktur Fahrzeuggewicht einzusparen und damit den Verbrauch an Energie zu senken. Durch die erfindungsgemäße Crashstruktur bzw. das erfindungsgemäße Verfahren wird die Sicherheit der Sensierung durch die Sensorik und auch die Geschwindigkeit dieser Sensierung verbessert.

Die erfindungsgemäße Crashstruktur befindet sich im vorderen Bereich des Fahrzeugs. Diese Crashstruktur wird unmittelbar nach dem Kontakt mit dem Kollisionsgegner eine Deformation erfahren. Bauartbedingt ist eine schnelle Sensierung und Aktuierung erforderlich, vorzugsweise im einstelligen Millisekundenbereich. Die Aktorik darf während der Sensierung und der Aktuierung nicht durch Crashkräfte belastet werden. Durch die erfindungsgemäße Crashstruktur bzw. das erfindungsgemäße Verfahren ist eine schnelle Unterscheidung von Kollisionsschweren sicher und zuverlässig möglich. Zudem wird mit der vorgestellten Erfindung erreicht, dass eine Sensierung und Aktuierung erfolgen kann, ohne dass die Aktorik bereits belastet wird.

Die Crashstruktur soll eine herkömmliche Crashbox und den vorderen Teil des Längsträgers ersetzen. Damit müssen auch die beiden Funktionalitäten dieser zu ersetzenden Elemente abgebildet und zumindest zwei, später auch mehrere Steifigkeiten einstellbar sein. Üblicherweise ist die Grundeinstellung der Crashstruktur eine höhere Steifigkeit, die der Steifigkeit des vorderen Längsträgers üblicherweise entspricht. Es sind jedoch auch beliebig andere Steifigkeitsniveaus möglich, denn die Erfindung ist auch darauf ebenso anwendbar. Die Entscheidung, ob ein Umschalten der Steifigkeit stattfindet oder nicht, fällt anhand der Unfallschwere, die es zu erkennen gilt. Beispielsweise soll ein Umschalten von hart auf weich bei der Steifigkeit bei einer Geschwindigkeit von kleiner = 16km/h erfolgen. Diese Grenzgeschwindigkeit kann jedoch beliebig gewählt werden. Eine Unterscheidung für weitere Steifigkeitseinstellungen, die die Aktorik vornimmt, ist ohnehin möglich.

Die Crashstruktur ist, wie oben dargestellt, ein Element, das anstatt des vorderen Teils des Längsträgers und der Crashbox eingebaut wird. Dafür hat diese Crashstruktur die notwendigen Schnittstellen, um zuverlässig eingebaut werden zu können, beispielsweise durch eine Verschraubung oder eine Verschweißung. Die Crashstruktur dient zur Aufnahme von Crashenergie, d. h. kinetische Energie wird in Verformungsenergie umgewandelt und somit abgebaut. Dies schützt den Fahrzeuginsassen. Durch den Einbauort ist klar, dass die Crashstruktur in die Fahrzeugfront eingebaut wird.

Prinzipiell ist es aber möglich, die erfindungsgemäße Crashstruktur im Fahrzeugheck einzusetzen.

Mit Modulen sind allgemein Bauteile der Crashstruktur bezeichnet, die miteinander verbunden sind, wobei die Verbindung ab einer vorbestimmten Kraft bricht, so dass sich dann die wenigstens zwei Module relativ zueinander bewegen, bis wenigstens ein Anschlag erreicht ist. Üblicherweise wird ein Modul, das zur bisherigen Crashstruktur gehört, feststehen und sich das andere Modul zu dem feststehenden Modul bewegen. Aber auch andere Konfigurationen sind vorliegend möglich. Die Verbindung und auch die vorbestimmte Kraft sind gemäß den abhängigen Ansprüchen definiert. Der Anschlag bezeichnet, dass das eine Modul, was sich üblicherweise bewegt, sich dann nicht mehr weiter bewegen kann. Sowohl das Brechen als auch der Anschlag führen zu deutlich wahrnehmbaren Signalen, wie durch eine Sensorik, beispielsweise eine Beschleunigungssensorik oder Körperschallsensorik leicht erfasst werden können.

Die Aktorik führt üblicherweise in Abhängigkeit von dem erkannten Crash eine Anpassung der Steifigkeit der Crashstruktur durch. Die Aktorik wird elektrisch angesteuert und kann beispielsweise bei einer Verformung durch Verjüngung den Grad der Verjüngung ändern. Aber die Aktorik kann auch andere Arten der Verformung, die jeweils vorgesehen sind, verändern. Eine Sensorik erzeugt dieses einen Crash charakterisierende Signal. Durch die Erfindung hat das Signal die Information über das Brechen und das Erreichen des Anschlags. Dass die Einstellung der Steifigkeit in Abhängigkeit von diesem Signal von der Sensorik erfolgt, heißt jedoch auch, dass ein Zwischenschritt, nämlich eine Verarbeitung dieses Signals beispielsweise in einem Steuergerät, dass sich in oder außerhalb der Crashstruktur befindet, erfolgen kann. Diese Verarbeitung hält beispielsweise das Brechen und das Erreichen des Anschlags fest und bestimmt daraus die Eindringgeschwindigkeit. Anhand der Eindringgeschwindigkeit kann eine eventuelle Einstellung der Steifigkeit bestimmt werden.

Durch die in den abhängigen Ansprüchen aufgeführten Maßnahmen und Weiterbildungen sind vorteilhafte Verbesserungen der in den unabhängigen Patentansprüchen angegebenen Crashstruktur bzw. das in den unabhängigen Patentansprüchen angegebenen Verfahrens zur Einstellung einer Steifigkeit einer Crashstruktur möglich.

Vorteilhafter Weise sind die wenigstens zwei Module im vorderen Bereich der Crashstruktur angeordnet. D. h. in Folge des Crashs wird zunächst das Brechen der Verbindung zwischen den wenigstens zwei Modulen stattfinden und dann die Relativbewegung, bis der Anschlag erreicht ist. Erst dann wird die Crashstruktur verformt. Daher ist es zweckmäßig, die wenigstens zwei Module im vorderen Bereich der Crashstruktur anzuordnen. Dabei kann eine Verbindung zum Querträger des Fahrzeugs an der Fahrzeugfront vorgesehen sein.

Die Verbindung zwischen den wenigstens zwei Modulen ist vorzugsweise kraftschlüssig ausgebildet, also beispielsweise durch eine Verschraubung oder Vernietung. In Folge der Relativbewegung kann es dann zur Ausbildung von Scherkräften kommen, die zu einem Brechen der Verbindung führen. Dabei ist die vorbestimmte Kraft, ab der dieses Brechen erfolgt, die niedrigst mögliche einstellbare Steifigkeit der Crashstruktur. Damit erfüllt vorzugsweise die erfindungsgemäße Crashstruktur auch die Funktion einer Crashbox. Die Crashbox ist nämlich so ausgelegt bezüglich ihrer Steifigkeit, wie es die niedrigst mögliche Steifigkeit der einstellbaren Crashstruktur ist.

Vorteilhafter Weise ist ein erstes der wenigstens zwei Module ein Hohlprofil, in das ein zweites der wenigstens zwei Module eindringt. Dieses zweite der wenigstens zwei Module weist am vom Hohlprofil abgewandten Ende eine Adapterplatte auf. Vorzugsweise ist dabei das zweite der wenigstens zwei Module auch als Profil ausgebildet und mit der Adapterplatte einstückig ausgeführt. An der Adapterplatte kann vorzugsweise eine Sensorik wie eine Beschleunigungs- oder Körperschallsensorik angebracht sein, die das Signal ausgibt, das das Brechen und das Erreichen des Anschlags angibt. Die Steifigkeit der Crashstruktur wird dann in Abhängigkeit von diesem Signal eingestellt.

Vorteilhafter Weise wird das Signal auch für die Ansteuerung von Personenschutzmitteln wie Airbags oder Gurtstraffern verwendet. Auch eine Meldung an den Fahrer in Abhängigkeit von einem Signal kann ausgegeben werden. Eine solche Meldung ist beispielsweise, dass der Fahrer prüfen soll, ob ein Austausch in der Werkstatt der crashaktiven Struktur gegeben ist.

Ausführungsbeispiele der Erfindung sind in der nachfolgenden Beschreibung näher erläutert und in der Zeichnung dargestellt.

Es zeigen

Figur 1 eine Fahrzeugfront mit einer erfindungsgemäßen Crashstruktur,
Figur 2 eine erste Ausführungsvariante der Erfindung,
Figur 3 einen Signalverlauf,
Figur 4 eine zweite Variante der Erfindung,
Figur 5 eine dritte Variante der Erfindung,
Figur 6 eine vierte Variante der Erfindung,
Figur 7 eine fünfte Variante der Erfindung und
Figur 8 ein Flussdiagramm des erfindungsgemäßen Verfahrens.

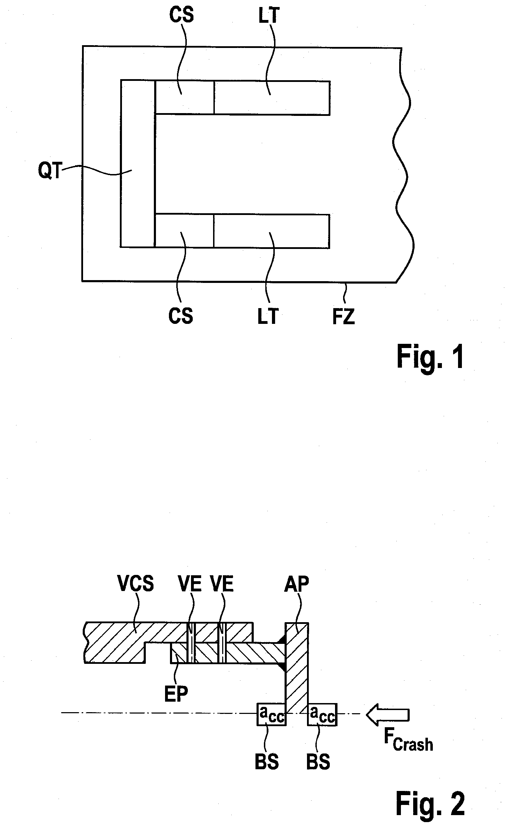

Figur 1 zeigt eine Fahrzeugfront eines Fahrzeugs FZ mit einem Querträger QT und einer crashaktiven Struktur CS, die zwischen Querträger und den jeweiligen Längsträgern LT angeordnet ist. Die Aufgabe der Crashstruktur CS ist die Aufnahme von Crashenergie, indem Bewegungsenergie in Verformungsenergie umgewandelt wird. Dazu ist die Crashstruktur mit einer einstellbaren Steifigkeit versehen. Diese Steifigkeit wird in Abhängigkeit von einem Signal eingestellt, das erfindungsgemäß durch einen Sensor erzeugt wird, der anhand der erfindungsgemäßen Ausprägung misst, wie die Eindringgeschwindigkeit mithin die Kollisionsgeschwindigkeit ist. Damit kann die Steifigkeit dann kraftfrei eingestellt werden.

Die Erfindung sieht vor, dass im vorderen Teil der Crashstruktur eine Relativbewegung zwischen einem ersten und einem zweiten Modul der Crashstruktur stattfindet. Diese Module können beispielsweise Profile sein, wobei ein erstes Modul ein Hohlprofil ist, in das das zweite Profil eindringt.

Figur 2 zeigt eine Skizze der relevanten Bauteile. Am Abschluss des eindringenden Profils EP kann sich eine Adapterplatte AP zur Befestigung weiterer Bauteile, wie in der Figur dargestellt, oder aber auch der Querträger direkt befestigt sein. Das Profil EP, beispielsweise ein Rohr und die Adapterplatte AP können aus dem Vollen gefertigt sein, also einstückig oder auch gefügt werden, wie in der Figur 2 dargestellt, beispielsweise geschweißt. Das eindringende Profil EP ist über Verbindungselemente VE mit der vorderen Crashstruktur VCS verbunden. Diese Verbindung ist üblicherweise kraftschlüssig, beispielsweise Schrauben oder Nieten, es sind jedoch auch andere Verfahren vorstellbar. Die Verbindungselemente VE stellen bei einer Kollision eine Sollbruchstelle dar. Ab einer definierten Kraft, die auf dem Niveau der unteren Steifigkeit der Crashstruktur liegt, z. B. auf dem Crashboxniveau, müssen diese Elemente VE versagen. Siehe dazu auch die Richtung durch F-Crash. Nur dadurch ist sichergestellt, dass es auch bei einem leichten Crash, der auf dem Absorptionsniveau einer Crashbox liegt, zu einer Sensierung der Kollisionsschwere kommt, da dafür das Brechen der Verbindungselemente, beispielsweise Bolzen VE, erforderlich ist. Diese Bolzen VE dürfen nicht zu schwach dimensioniert sein, da ansonsten auch bei leichteren Kollisionen, die unter dem Wirkbereich der Crashbox liegen, ein Brechen der Bolzen auftritt und somit eine Reparatur der Struktur erforderlich wäre, ohne dass die ineinander eindringenden Profile der Struktur überhaupt eine Relativbewegung erfahren haben.

Es ist jedoch genauso möglich, wenn auch nicht in Figur 2 dargestellt, dass das Profil VCS der vorderen Crashstruktur innen liegt und das eindringende Profil außen an der Crashstruktur geführt ist. Wichtig ist, dass es beim Verschieben der Rohre EP und VCS gegeneinander einen festen Anschlag gibt.

Zur Sensierung der Unfallschwere wird ein Beschleunigungssensor BS eingesetzt. Dieser wird an der Adapterplatte AP angebracht, wahlweise innen oder außen. In Figur 2 sind beide Montagemöglichkeiten dargestellt, verwendet wird jedoch pro Crashstruktur und damit pro Fahrzeugseite lediglich ein Sensor.

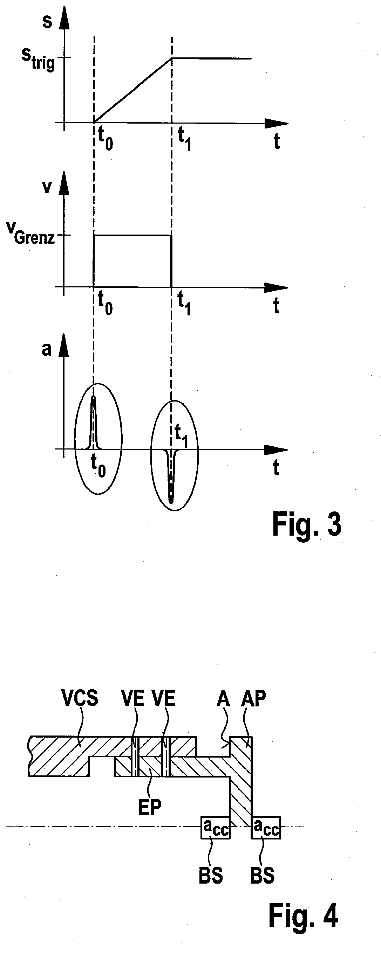

Die Kollisionskraft wird über die Fahrzeugfront auf die Adapterplatte und das eindringende Profil EP übertragen. Die Verbindungselemente werden dadurch auf Scherung belastet. Beim Bruch der Verbindungselemente VE gibt es eine Relativbewegung zwischen den dargestellten Bauteilen. Das Losbrechen wird im Signal des Beschleunigungssensors BS in einem ausgeprägten Peak sichtbar. Einen zweiten Peak wird es geben, wenn das Verstellelement am Verjüngungsrohr VCS anschlägt. Die Peaks sind in Figur 3 vereinfacht dargestellt, nämlich in dem unteren Beschleunigungszeitdiagramm sind diese eingekreist. Die jeweiligen Zeiten $t_0$ oder $t_1$ kennzeichnen die Zeit, in der sich die erfindungsgemäßen Module gegeneinander bewegt haben. In den oberen beiden Diagrammen ist dieser Weg und auch als Geschwindigkeit dargestellt.

$t_0$: Bruch der Bolzen führt zu einem Peak im Signal des Beschleunigungssensors.

$t_1$: Anschlag des Verstellelements am Verjüngungsrohr führt zum Peak im Signal des Beschleunigungssensors.

Die Zeit zwischen den beiden Peaks wird gemessen. Die Relativbewegung, die die beiden Bauteile machen können, ist bekannt. Somit kann ausgerechnet werden, wie hoch die Eindringgeschwindigkeit und damit die Kollisionsgeschwindigkeit ist. Anhand dieser Geschwindigkeit kann entschieden werden, ob eine Umstellung der Steifigkeit der Crashstruktur vorgenommen werden soll oder nicht.

$$v_{rel} = \frac{s_{trig}}{t_{sens}}$$

Mit $t_{sens} = t_1 - t_0$: Zeit, zwischen den ausgeprägten Peaks im Beschleunigungssignal.

$s_{trig}$: Weg, den die beiden Bauteile gegeneinander zurücklegen können.

$v_{rel}$: Relativgeschwindigkeit zwischen den Bauteilen.

Dazu wird die Gleichung nach der Sensierzeit umgestellt und als Geschwindigkeit die Geschwindigkeit eingesetzt, ab der ein Umschalten auf die weiche Steifigkeit erfolgen soll ($v_{Grenz}$):

$$t_{Grenz} = \frac{s_{trig}}{v_{Grenz}}$$

mit

$s_{trig}$: Weg, den die beiden Bauteile gegeneinander zurücklegen können.

$v_{Grenz}$: Relativgeschwindigkeit, unterhalb derer ein Umschalten der Steifigkeit erfolgen soll.

$t_{Grenz}$: Zeit, die bei der Grenzgeschwindigkeit zwischen den beiden Peaks liegt.

Der Gleichung ist zu entnehmen, dass bei einer Kollisionsgeschwindigkeit, die unterhalb der Geschwindigkeit $v_{Grenz}$ liegt, die Zeit $t_{Grenz}$ überschritten wird. Dies wird als Auslösekriterium für ein Umschalten auf die geringere Steifigkeit der Crashstruktur herangezogen. $s_{trig}$ und $v_{Grenz}$ sind dabei so zu wählen, dass die benötigte Zeit für eine lastfreie Aktuierung der Aktorik verbleibt.

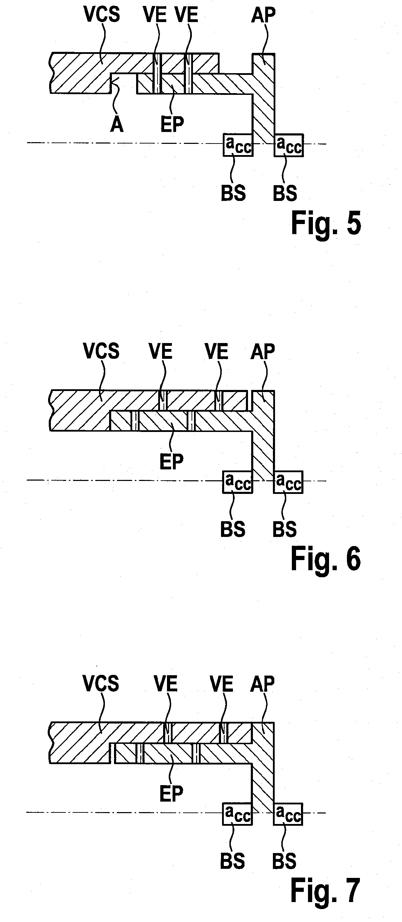

Der Anschlag des eindringenden Profils in das Profil der vorderen Crashstruktur VCS kann entweder innen oder außen liegen, wie es in den Figuren 4 und 5 dargestellt ist. Der Anschlag ist dabei mit a bezeichnet, die übrigen Elemente sind mit gleichen Bezugszeichen bezeichnet. Ob der Anschlag innen oder außen liegt, ergibt sich nach der Erfordernis der Montage. Bei einem innenliegenden Anschlag ergibt sich der Vorteil, dass beispielsweise bei einem Verschweißen der Adapterplatte mit dem eindringenden Profil EP der Wulst der Schweißnaht nicht den Anschlag stört. Bei einer Verschraubung in Längsrichtung würde dieses Problem beispielsweise nicht auftreten. Für die Sensierung sind beide Varianten gleichwertig.

In den Figuren 2 und folgende sind zwei Verbindungselemente in Längsrichtung dargestellt. Die Anzahl kann jedoch prinzipiell aus einem oder mehreren Elementen bestehen. Den dargestellten Schnittbildern sind zwei Verbindungselemente über den Umfang der Profile zu entnehmen. Auch hier gilt, dass prinzipiell ein oder mehrere Verbindungselemente über den Umfang verteilt sein können. Die Dimensionierung der Elemente erfolgt dementsprechend.

Die dargestellten Verbindungselemente bieten den Vorteil, dass die Strukturen vor der Crashstruktur, z. B. ein montierter Querträger samt Aggregaten in Längsrichtung an dem vorderen Teil der Crashstruktur fixiert ist. Die dargestellten Verbindungselemente sind eine einfache Realisierung dieser Fixierung.

Durch die ausgeprägten Beschleunigungspeaks bei einem Bruch der Verbindungselemente kann zudem festgestellt werden, dass eine Belastung der Struktur mindestens auf Crashboxniveau stattgefunden hat und dass die Crashstruktur eine Deformation erfahren hat. Dies bietet den Vorteil, dass der Fahrer, der die tatsächliche Schwere und die Erfordernis eines Werkstattbesuches nicht sicher einschätzen kann, über eine Meldung aufgefordert werden kann, sein Fahrzeug untersuchen zu lassen. Dies kann beispielsweise über das interne Infotainmentsystem erfolgen.

Die verwendeten Beschleunigungssensoren bieten in Kombination mit der Montage den Vorteil, dass sie auch über die Entscheidung zum Schalten der adaptiven Crashstruktur hinaus Daten liefern können, die bei der Auslösung von Rückhaltemitteln herangezogen werden können. Dies betrifft Parameter wie Zeitpunkt, Stärke, aber auch für Offset-Crashs oder schrägen Aufprall. Eine herkömmliche Upfrontsensorik kann bedingt durch den Einbauort nur für wenige Millisekunden ein Signal liefern. Danach sind Einbauort und/oder Sensorik durch die kollisionsbedingte Deformation zerstört bzw. liefern sie keine verlässlichen Signale mehr. Vor allem bei innenliegender Montage wird die Sensorik nach dieser Erfindung davor geschützt.

Die Daten können neben der Integration in eigenständige Steuergeräte wie ESP und Airbagsteuergeräte auch in einem kombinierten Steuergerät Airbag mit Fahrdynamikfunktionen integriert und ausgewertet werden. Diese können ebenfalls die Ansteuerung der Aktuatorik vornehmen oder aber Signale und Befehle erzeugen, welche über ein Bussystem an andere Steuergeräte übermittelt werden, welche dann eine Aktivierung der Aktuatorik vornehmen. Ebenfalls ist es denkbar, dass die Daten über ein Bussystem wie einen CAN-Bus einem Steuergerät zugesendet werden, worin die Aufarbeitung sowie Verarbeitung der Daten in einem Algorithmus stattfindet. Dies kann beispielsweise das Airbagsteuergerät sein.

Die Figuren 6 und 7 zeigen die jeweilige Struktur mit innen- und außenliegendem Anschlag in eingerücktem Zustand, d. h. der Anschlag ist erreicht.

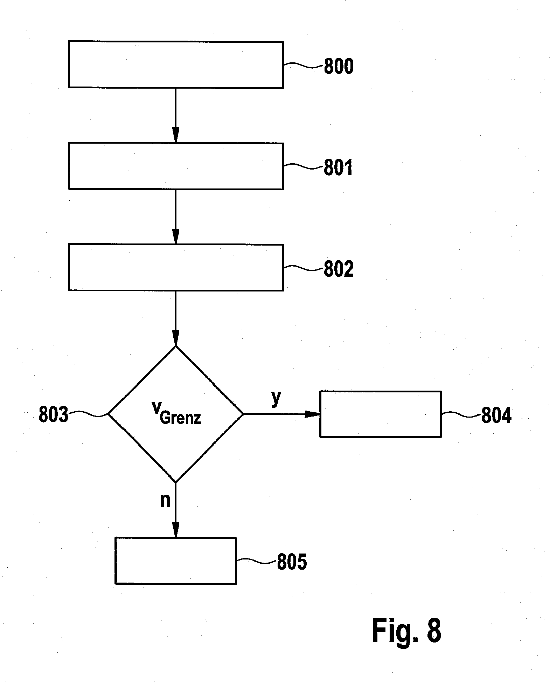

Figur 8 zeigt ein Flussdiagramm des erfindungsgemäßen Verfahrens. Im Verfahrensschritt 800 wird das Sensorsignal erzeugt, wenn die beiden Module sich gegeneinander bewegen und der Anschlag erreicht worden ist. Im Verfahrensschritt 801 erfolgt die Analyse dieses Sensorsignals auf Signalmerkmale, die das Brechen und den Anschlag charakterisieren. Daraus wird dann im Verfahrensschritt 802 die Eindringgeschwindigkeit bestimmt. Im Verfahrensschritt 803 wird festgestellt, ob die Eindringgeschwindigkeit kleiner als eine vorgegebene Grenzgeschwindigkeit $v_{Grenz}$ ist. Ist das der Fall, erfolgt im Verfahrensschritt 804 die Anpassung der Steifigkeit, denn wenn im Anfangszustand die Steifigkeit hoch eingestellt ist, aber die Grenzgeschwindigkeit niedrig ist, muss die Steifigkeit auf einen weicheren Crash gesenkt werden. Zusätzlich kann eine Warnung an den Fahrer ausgegeben werden. Ist jedoch die Geschwindigkeit größer als $v_{Grenz}$ im Verfahrensschritt 803, wird im Verfahrensschritt 805 keine Änderung der Steifigkeit vorgenommen, da nunmehr mit einem harten Crash zu rechnen ist.

**Patentansprüche**

1. Crashstruktur (CS) zur Aufnahme von Crashenergie für einen Einbau in eine Fahrzeugfront, wobei die Crashstruktur (CS) wenigstens zwei Module (VCS, EP) aufweist, die miteinander verbunden sind, dass diese Verbindung ab einer vorbestimmten Kraft bricht, sodass sich dann die wenigstens zwei Module (EP, VCS) relativ zueinander bewegen, bis wenigstens ein Anschlag (A) erreicht ist, **dadurch gekennzeichnet, dass** die Crashstruktur (CS) eine Sensorik (BS) aufweist, die ein Signal ausgibt, welches das Brechen und das Erreichen des Anschlags (A) angibt, wobei eine Steifigkeit der Crashstruktur (CS) in Abhängigkeit von diesem Signal einstellbar ist.

**2.** Crashstruktur nach Anspruch 1, **dadurch gekennzeichnet, dass** die wenigstens zwei Module (VCS, EP) im vorderen Bereich der Crashstruktur (CS) angeordnet sind.

**3.** Crashstruktur nach Anspruch 1 oder 2, **dadurch gekennzeichnet, dass** die Verbindung kraftschlüssig ausgebildet ist.

**4.** Crashstruktur nach einem der vorhergehenden Ansprüche, **dadurch gekennzeichnet, dass** die vorbestimmte Kraft die niedrigst einstellbare Steifigkeit der Crashstruktur (CS) ist.

**5.** Crashstruktur nach einem der vorhergehenden Ansprüche, **dadurch gekennzeichnet, dass** ein erstes der wenigstens zwei Module (EP, VCS) ein Hohlprofil ist, in das das zweite der wenigstens zwei Module (EP, VCS) eindringt.

**6.** Crashstruktur nach Anspruch 5, **dadurch gekennzeichnet, dass** das zweite der wenigstens zwei Module am vom Hohlprofil abgewandten Ende eine Adapterplatte aufweist.

**7.** Crashstruktur nach Anspruch 6, **dadurch gekennzeichnet, dass** das zweite der wenigstens zwei Module (VCS, EP) als Profil ausgebildet ist und mit der Adapterplatte (AP) einstückig ausgeführt ist.

**8.** Crashstruktur nach Anspruch 6 oder 7, **dadurch gekennzeichnet, dass** die Sensorik (BS) an der Adapterplatte (AP) angebracht ist.

**9.** Crashstruktur nach Anspruch 1 mit einer Aktorik, die eine Steifigkeit der Crashstruktur in Abhängigkeit von dem Signal einstellt.

**10.** Verfahren zur Einstellung einer Steifigkeit einer Crashstruktur (CS), die zur Aufnahme von Crashenergie verwendet wird, wobei die Steifigkeit in Abhängigkeit von einem einen Crash charakterisierenden Signal eingestellt wird, wobei das Signal von einer Sensorik (BS) bereitgestellt wird, **dadurch gekennzeichnet, dass** das Signal ein Brechen einer Verbindung wenigstens zweier Module (VCS, EP) und ein Erreichen eines Anschlags (A) nach einer Relativbewegung der wenigstens zwei Module (VCS, EP) angibt.

**11.** Verfahren zur Ansteuerung von Rückhaltemitteln unter Verwendung des Signals aus dem Verfahren nach Anspruch 10.

**12.** Verfahren nach Anspruch 10 oder 11, **dadurch gekennzeichnet, dass** eine Meldung an einen Fahrer in Abhängigkeit von dem Signal ausgegeben wird.

**Claims**

**1.** Crash structure (CS) for absorbing crash energy for an installation in the front part of a vehicle, wherein the crash structure (CS) has at least two modules (VCS, EP) which are connected to one another, and in that this connection ruptures starting from a predetermined force with the result that the at least two modules (EP, VCS) move relative to one another until at least one stop (A) is reached,
**characterized in that**
the crash structure (CS) has a sensor system (BS) which outputs a signal which indicates the rupture and the reaching of the stop (A), wherein the rigidity of the crash structure (CS) can be adjusted as a function of this signal.

**2.** Crash structure according to Claim 1, **characterized in that** the at least two modules (VCS, EP) are arranged in the front region of the crash structure (CS) .

**3.** Crash structure according to Claim 1 or 2, **characterized in that** the connection is embodied in a frictionally locking fashion.

**4.** Crash structure according to one of the preceding claims, **characterized in that** the predetermined force is the lowest rigidity of the crash structure (CS) which can be set.

**5.** Crash structure according to one of the preceding claims, **characterized in that** a first of the at least two modules (EP, VCS) is a hollow profile which is penetrated by the second of the at least two modules (EP, VCS).

**6.** Crash structure according to Claim 5, **characterized in that** the second of the at least two modules has an adapter plate at the end facing away from the hollow profile.

**7.** Crash structure according to Claim 6, **characterized in that** the second of the at least two modules (VCS, EP) is embodied as a profile and is embodied in one piece with the adapter plate (AP).

**8.** Crash structure according to Claim 6 or 7, **characterized in that** the sensor system (BS) is attached to the adapter plate (AP).

**9.** Crash structure according to Claim 1 having an actuator system which sets the rigidity of the crash structure as a function of the signal.

**10.** Method for the setting of the rigidity of a crash structure (CS) which is used to absorb the crash energy, wherein the rigidity is set as a function of a signal which characterizes a crash, wherein the signal is made available by a sensor system (BS), **characterized in that** the signal specifies the rupture of a connection between at least two modules (VCS, EP) and the reaching of a stop (A) after a relative movement of the at least two modules (VCS, EP) .

**11.** Method for actuating restraining means using the signal from the method according to Claim 10.

**12.** Method according to Claim 10 or 11, **characterized in that** a message is output to a driver as a function of the signal.

**Revendications**

**1.** Structure écrasable (CS) destinée à absorber l'énergie d'une collision et prévue pour être incorporée à l'avant d'un véhicule,
la structure écrasable (CS) présentant au moins deux modules (VCS, EP) reliés l'un à l'autre de telle sorte que cette liaison se rompe à partir d'une force prédéterminée de manière que les deux ou plusieurs modules (EP, VCS) se déplacent l'un par rapport à l'autre au moins jusqu'à ce qu'une butée (A) soit atteinte,
**caractérisée en ce que**
la structure d'écrasement (CS) présente un ensemble (BS) de capteurs qui délivre un signal qui indique la rupture et l'atteinte de la butée (A), la rigidité de la structure d'écrasement (CS) pouvant être ajustée en fonction de ce signal.

**2.** Structure écrasable selon la revendication 1, **caractérisée en ce que** les deux ou plusieurs modules (VCS, EP) sont disposés dans la partie avant de la structure d'écrasement (CS).

**3.** Structure écrasable selon les revendications 1 ou 2, **caractérisée en ce que** la liaison est en correspondance mécanique.

**4.** Structure écrasable selon l'une des revendications précédentes, **caractérisée en ce que** la force prédéterminée est la rigidité la plus basse qui peut être ajustée pour la structure d'écrasement (CS).

**5.** Structure écrasable selon l'une des revendications précédentes, **caractérisée en ce qu'**un premier des deux ou plusieurs modules (EP, VCS) est un profilé creux dans lequel le deuxième des deux ou plusieurs modules (EP, VCS) pénètre.

**6.** Structure écrasable selon la revendication 5, **caractérisée en ce que** le deuxième des deux ou plusieurs modules présente une plaque d'adaptation à son extrémité non tournée vers le profilé creux.

**7.** Structure écrasable selon la revendication 6, **caractérisée en ce que** le deuxième des deux ou plusieurs modules (VCS, EP) est configuré comme profilé et est réalisé d'une seule pièce avec la plaque d'adaptation (AP).

**8.** Structure écrasable selon la revendication selon les revendications 6 ou 7, **caractérisée en ce que** l'ensemble (BS) de capteurs est installé sur la plaque d'adaptation (AP).

**9.** Structure écrasable selon la revendication selon la revendication 1, présentant de plus un ensemble d'actionneurs qui ajustent la rigidité de la structure d'écrasement en fonction du signal.

**10.** Procédé d'ajustement de la rigidité d'une structure d'écrasement (CS) utilisée pour reprendre l'énergie d'une collision, la rigidité étant ajustée en fonction d'un signal qui caractérise une collision, le signal étant délivré par un ensemble (BS) de capteurs, **caractérisé en ce que**
le signal indique la rupture d'une liaison entre au moins deux modules (VCS, EP) et l'atteinte d'une butée (A) après un déplacement relatif des deux ou plusieurs modules (BCS, EP).

**11.** Procédé de commande de moyens de retenue recourant au signal découlant du procédé selon la revendication 10.

**12.** Procédé selon les revendications 10 ou 11, **caractérisé en ce qu'**un message est délivré au conducteur en fonction du signal.

**Fig. 1**

**Fig. 2**

**Fig. 3**

**Fig. 4**

VCS   VE VE        AP

A     EP

a$_{cc}$   a$_{cc}$

BS    BS

Fig. 5

VCS    VE    VE  AP

EP

a$_{cc}$   a$_{cc}$

BS    BS

Fig. 6

VCS    VE    VE  AP

EP

a$_{cc}$   a$_{cc}$

BS    BS

Fig. 7

Fig. 8

# EP 2 590 851 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1792786 A2
- DE 19745656 A1
- WO 2009063275 A1
- US 4823923 A
- US 2008185852 A1
- EP 2022682 A1